**Europäisches Patentamt**

**European Patent Office**

**Office européen des brevets**

(11) Veröffentlichungsnummer : **0 371 073 B1**

(12) **EUROPÄISCHE PATENTSCHRIFT**

(45) Veröffentlichungstag der Patentschrift :
**17.06.92 Patentblatt 92/25**

(21) Anmeldenummer : **88907632.9**

(22) Anmeldetag : **07.09.88**

(86) Internationale Anmeldenummer :
**PCT/DE88/00562**

(87) Internationale Veröffentlichungsnummer :
**WO 89/02606 23.03.89 Gazette 89/07**

(51) Int. Cl.⁵ : **G02B 5/02,** F21V 5/08

(54) **VORRICHTUNG, BESTEHEND AUS EINER LICHTLEITPLATTE.**

(30) Priorität : **09.09.87 DE 3730169**
**19.09.87 DE 3731577**
**21.09.87 DE 3731676**
**27.10.87 DE 3736804**

(43) Veröffentlichungstag der Anmeldung :
**06.06.90 Patentblatt 90/23**

(45) Bekanntmachung des Hinweises auf die
Patenterteilung :
**17.06.92 Patentblatt 92/25**

(84) Benannte Vertragsstaaten :
**AT BE CH DE FR GB IT LI LU NL SE**

(56) Entgegenhaltungen :
**DE-A- 2 406 168**
**DE-A- 2 942 655**
**DE-B- 2 260 985**
**US-A- 3 222 515**
**US-A- 4 471 412**

(73) Patentinhaber : **FANDRICH, Heinz-Jürgen**
**Ritterfelddamm 112**
**W-1000 Berlin 22 (DE)**

(72) Erfinder : **FANDRICH, Heinz-Jürgen**
**Ritterfelddamm 112**
**W-1000 Berlin 22 (DE)**

(74) Vertreter : **Jander, Dieter, Dipl.-Ing. et al**
**Dipl.-Ing. Dieter Jander Dr.-Ing. Manfred**
**Böning Patentanwälte Leistikowstrasse 2**
**W-1000 Berlin 19 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 371 073 B1

**Beschreibung**

Die Erfindung bezieht sich auf eine Vorrichtung, bestehend aus einer Lichtleitplatte, in der Licht, ausgehend von einer Lichtquelle, mit Komponenten parallel zu den großen Plattenflächen geführt wird und aus Erhebungen auf einer Plattenfläche austritt.

Bei einer bekannten Vorrichtung dieser Art (DE-OS 32 40 942) sitzen die Erhebungen mit Abständen unmittelbar auf der Platte. Über ihre Größe und Abstände wird nichts ausgeführt. Für die Ausführungsbeispiele ist davon auszugehen, daß diese Werte im Zentimeterbereich liegen. Die Abstrahlung des Lichts von der Plattenfläche ist ungleichmäßig, weil nur die mit Erhebungen besetzten Bereiche der Fläche Licht abgeben.

Der Erfindung liegt die Aufgabe zugrunde, die bekannte Vorrichtung derart weiterzubilden, daß sich eine für das Auge gleichmäßige Flächenleuchtdichte ergibt.

Diese Aufgabe wird erfindungsgemäß dadurch gelöst, daß die glatte Plattenfläche mit einer durchgehenden, durchsichtigen Zwischenschicht überzogen ist, die auf einer ihrer Seiten die Erhebungen aufweist, wobei letztere dicht an dicht und in Höhe und Breite in einem Bereich zwischen 0,5 mm und 0,001 mm liegen.

Da die Größen und Abstände der Lichtbereiche in Form der Erhebungen im erfindungsgemäßen Fall solcher Art sind, daß ihre Obergrenzen in etwa mit der Untergrenze des Auflösungsvermögens des menschlichen Auges zusammenfällt (dieses Auflösungsvermögen liegt dann vor, wenn der Abstand zweier Punkte größer als 0,2 mm ist, wenn sich die Punkte in einem Abstand von 1 m vom Auge befinden, s. Grimsehl, Lehrbuch der Physik, 3. Bd., 1955, S. 309), erscheint die große Fläche der erfindungsgemäßen Vorrichtung gleichmäßig leuchtend. Die Vorsehung der Zwischenschicht ermöglicht andererseits die Erzeugung der Erhebungen: Ohne Zwischenschicht ließen sich die Erhebungen der erfindungsgemäßen Art nicht schaffen. Die Untergrenze für die Größen der Erhebungen ist insofern sinnvoll, als sich kleinere Erhebungen nicht oder kaum noch herstellen lassen.

Der Vorteil des Erfindungsgegenstandes gegenüber mehreren, zu einer Flächenleuchte zusammengeschlossenen Direkt-Leuchten liegt in seiner billigeren Herstellung, seinem geringeren Energieverbrauch und seiner größeren Einfachheit.

Bezüglich der Erhebung bzw. der Schicht bestehen Variationsmöglichkeiten hinsichtlich der Form der Erhebungen, der Herstellung und des Materials der Schicht. Durch Variation dieser Werte kann man das Licht insofern steuern, als man die Intensität des austretenden Lichts längs einer Linie auf der abstrahlenden Fläche steuern kann: Beispielsweise kann man erreichen, daß das Licht über die gesamte Fläche überall mit gleicher Intensität austritt, wie man auch erreichen kann, daß das Licht in der nähe der Lichteinspeisung stärker oder schwächer als in Bereichen größerer Abstände von der Lichtquelle abgestrahlt wird. Natürlich geht hier auch die Bündelung des eingestrahlten Lichts bzw. sein Zerstreuungsgrad ein. So kann man die erwähnte schwächere Abstrahlung dadurch erreichen, daß man das Licht stark parallel zu den großen Flächen einfallen läßt, oder auch dadurch, daß man die Konvexität der Erhebungen längs der erwähnten Linie entsprechend ändert.

Die Herstellung der erfindungsgemäßen Vorrichtung ist einfach: Beispielsweise kann man auf die Platte eine Schicht aufsprühen: Ist die Konsistenz des aufzusprühenden Materials entsprechend, bilden sich die Erhebungen in der angegebenen Form aus. Man kann aber auch auf die Platte eine Folie oder zweite Platte aufziehen, die auf ihrer der ersten Platte abgewandten Seite die bewußten Erhebungen aufweist.

Die Erhebungen sind demgemäß in der Regel und bevorzugt kleine Hügelchen, deren Oberseiten in der Regel etwa kalottenförmig nach außen gewölbt, also konvex sind. Sie können aber auch konkav, d.h. letztlich linsenförmig sein. Sie sind in der Draufsicht größtenteils kreisförmig bis oval.

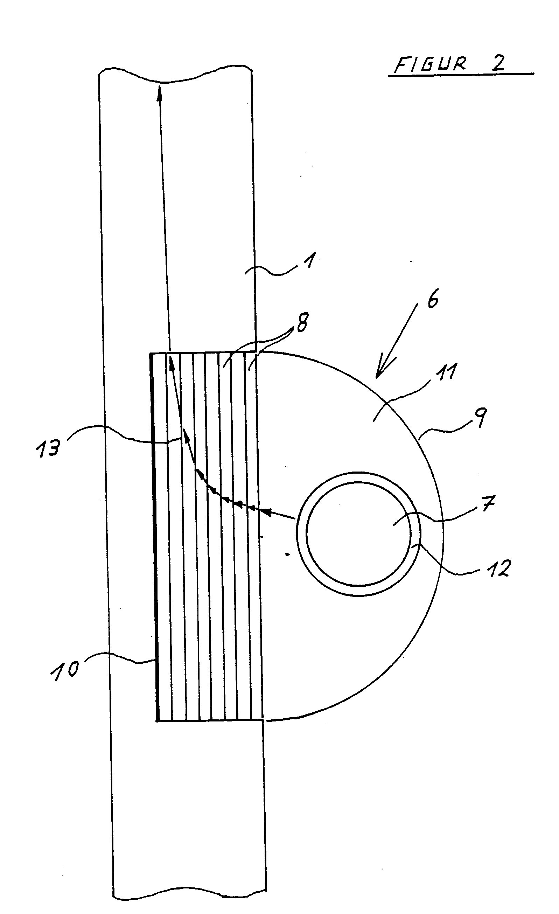

Es sei erwähnt, daß es auch schon bekannt ist (siehe Machine Design, Oktober 29, 1959, Seite 96, Fig. 2b), eine Lichtleitplatte mit Erhebungen zu versehen, die dicht an dicht liegen und deren Erstreckungen in Höhe und Breite kleiner als 0,5 mm sind. Indessen werden in diesem Falle die Erhebungen durch Behandlung der Plattenoberfläche, nämlich durch Sandstrahlen, Kratzen u.dgl., erzeugt. Es ist also nicht die zusätzliche Schicht vorgesehen, was den Nachteil mit sich bringt, daß das in die Platte eingespeiste Licht sehr schnell wieder austritt. Hinzu kommt, daß die Außenseiten der Erhebungen Kanten und zur Seite hin gerichtete Flächen aufweisen, was der Lichtabstrahlung nach vorn abträglich ist.

Die Dicke der Platte kann in weiten Grenzen schwanken, z.B. kann es sich bei dieser um eine dünne Folie handeln.

Eine Weiterentwicklung der erfindungsgemäßen Vorrichtung, bei der die Schicht lichtdurchlässig ist, die Erhebungen auf der der Platte abgewandten Seite angeordnet sind und die Schicht optisch dünner als die Platte ist, besteht darin, daß sich gegenüber der Lichtaustrittsfläche ein Reflektor befindet, der das Licht aus der nicht mit der Schicht versehenen Plattenfläche austreten läßt. Dieser Reflektor kann einen Abstand von der Schicht aufweisen, er kann aber auch durch eine weitere Schicht, die unmittelbar auf der die Erhebungen aufweisenden Schicht sitzt, gebildet werden, die insbesondere ostisch dünner als die die Erhebungen aufweisende Schicht ist. natürlich kann diese zusätzliche Schicht auch optisch dichter sein als die die Erhebungen aufweisende Schicht; in diesem Falle würde dann ein Teil der Strahlen durch diese zusätzliche Schicht hindurchgehen und ein Teil derselben reflektiert werden.

Von besonderer Bedeutung ist natürlich die Einspeisung des Lichtes in die Lichtleitplatte. Zweckmäßig ist es, wenn das Licht von einer vorzugsweise einer großen. Plattenfläche gegenüber angeordneten Lichtquelle ausgeht und durch Reflektions- und/oder Refraktionselemente in die Platte eingeleitet wird.

Werden Refraktionselemente verwendet, dann sollten vorzugsweise mehrere lichtdurchlässige Schichten vorgesehen sein, die parallel oder schräg zur Lichtleitplatte angeordnet und ganz oder teilweise in diese eingelassen sind, wobei deren Dichten in Strahlungsrichtung abnehmen. In diesem Falle würde das Licht beim Durchgang durch die Schichten stufenweise gekrümmt werden, um dann mehr oder weniger parallel zu den großen Flächen der Lichtleitplatte in diese einzudringen. Natürlich ist es auch möglich, nur eine einzige Umlenkschicht vorzusehen.

Handelt es sich um Reflektionselemente, so ist es zweckmäßig, daß diese durch mindestens eine schräg zu den großen Plattenflächen verlaufende Spiegelfläche gebildet werden. Die Spiegelfläche kann in die Platte eingelassen sein oder auf dieser sitzen. Zweckmäßig ist es, wenn an einem Rand der Platte im Bereich der Lichtquelle ein Stück auf den Rand aufgestülpt ist, das schräge, von den großen Plattenflächen weg, zu der Lichtquelle laufende Spiegelflächen besitzt. Auch kann die Spiegelfläche gewölbt sein. Die Spiegelfläche kann eine total reflektierende Fläche oder ein normaler Spiegel sein.

Weitere Einzelheiten der Erfindung ergeben sich aus der Zeichnung. Darin zeigen:

Fig. 1 einen Schnitt durch einen Teil einer Vorrich tung gemäß der Erfindung,

Fig. 2 einen ebensolchen Schnitt wie Figur 1 mit Darstellung eines ersten Lichteinstrahlelementes und

Fig. 3 ebenfalls einen solchen Schnitt mit Darstellung eines zweiten Einstrahlelementes.

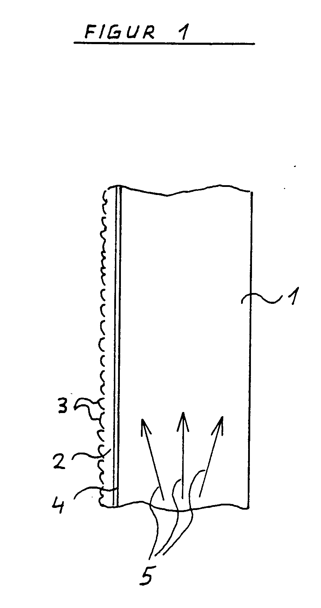

In Fig. 1 ist mit 1 eine Lichtleitplatte, mit 2 eine Schicht, die auf ihrer linken Seite Erhebungen 3 aufweist, und mit 4 eine Klebschicht bezeichnet. Das Licht läuft durch die Platte 1, etwa gemäß den Pfeilen 5.

Fig. 2 zeigt wieder die Lichtleitplatte 1 und ein Lichteinstrahlelement 6. Dieses besteht aus einer Lichtquelle, z.B. einer Leuchtröhre 7, mehreren lichtdurchlässigen Schichten 8, einer Spiegelfläche 9 und einer Spiegelfläche 10. Auch zwischen der Leuchtröhre 7 und der vordersten Schicht 8 befindet sich eine lichtdurchlässige Schicht 11, die eine Aussparung 12 zur Aufnahme der Leuchtröhre 7 aufweist. Die Dichten der Schichten 8 und des Körpers 11 sind solcher Art, daß der Lichtstrahl 13 den dargestellten Verlauf hat.

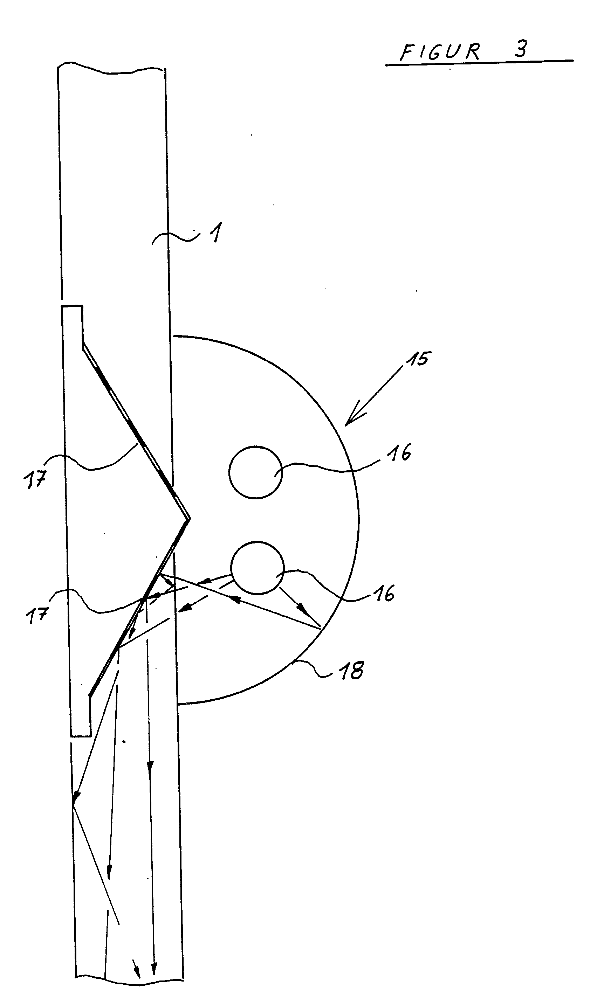

Fig. 3 zeigt neben der Lichtleitplatte 1 en anderes Lichteinstrahlelement 15. Dieses besteht aus zwei Leuchtröhren 16, einem dachförmigen Reflektor 17 und einem Hohlspiegel 18. Der Verlauf der Lichtstrahlen ist in der unteren Hälfte der Figur eingezeichnet.

Selbstverständlich kann über der Schicht 2 (siehe Fig. 1) mindestens eine weitere Schicht vorfesehen werde!, die ebenfalls Erhebungen 3 aufweist. Die Dichten dieser Schichten sollten sich unterscheiden. Auf diese Weise ist eine weitere Steuermöglichkeit für das in der erfindungsgemäßen Vorrichtung geführte bzw. aus dieser austretende Licht geschaffen.

Anstelle der Lichtleitplatte kann natürlich auch ein irgendwie geformter Körper vorgesehen werden. Beispielsweise braucht die Platte nicht eben zu sein; sie kann z.B. zu einem Hohlzylinder entartet sein, der insbesondere die mit Erhebungen aufweisende Schicht in seinem Innern aufweist. Ein solcher Körper könnte als beleuchteter Handlauf eines Treppengeländers dienen.

Natürlich können auch Linsen und/oder Reflektoren vorgesehen sein, um das eintretende Licht in stärker gebündelter Form in die Lichtleitplatte hineinzuleiten.

**Patentansprüche**

1. Vorrichtung, bestehend aus einer Lichtleitplatte, in der Licht, ausgehend von einer Lichtguelle, mit Komponenten parallel zu den großen Plattenflächen geführt wird und aus Erhebungen (3) auf einer Plattenfläche austritt, dadurch gekennzeichnet, daß die glatte Plattenfläche mit einer durchgehenden, durchsichtigen Zwischenschicht (2) überzogen ist, die auf einer ihrer Seiten die Erhebungen (3) aufweist, wobei letztere dicht an dicht und in Höhe und Breite in einem Bereich zwischen 0,5 mm und 0,001 mm liegen.

2. Vorrichtung nach Anspruch 1, dadurch gekennzeichnet, daß die Schicht (2) eine biegsame Folie oder eine steife Platte ist, die ohne Zwischenraum an der Lichtleitplatte (1) anliegt.

3. Vorrichtung nach Anspruch. 2, dadurch gekennzeichnet, daß die Folie oder steife Platte auf der Lichtleitplatte verklebt ist.

4. Vorrichtung nach einen der Ansprüche 1 bis 3, dadurch gekennzeichnet, daß die Schicht (2) durch Aufsprühen erzeugt worden ist.

5. Vorrichtung nach einem der Ansprüche 1 bis 4, dadurch gekennzeichnet, daß die Erhebungen (3) in Höhe und Breite zwischen 0,5 mm und 0,01 mm liegen.

3

6. Vorrichtung nach einem der Ansprüche 1 bis 5, dadurch gekennzeichnet, daß sich über den Erhebungen ein Reflektor befindet, der das Licht aus der nicht mit der Schicht (2) versehenen Plattenfläche austreten läßt.

7. Vorrichtung nach Anspruch 6, dadurch gekennzeichnet, daß sich zwischen dem Reflektor und den Erhebungen (3) eine weitere Schicht befindet, die optisch dünner als die Schicht (2) ist.

8. Vorrichtung nach Anspruch 7, dadurch gekennzeichnet, daß der Reflektor und die weitere Schicht nur einen Teil der gesamten Lichtleitplatte (1,2,3) bedecken derart, daß das Licht auch aus den Rändern dieser weiteren Schicht austritt.

9. Vorrichtung nach Anspruch 8, dadurch gekennzeichnet, daß die Ränder des Reflektors schräg uni reflektierend sind.

10. Vorrichtung nach einem der Ansprüche 1 bis 5, dadurch gekennzeichnet, daß beide Seiten der Lichtleitplatte mit der Lichtaustrittsschicht versehen sind.

11. Vorrichtung nach einem der Ansprüche 1 bis 10, dadurch gekennzeichnet, daß sich in mindestens einigen Erhebungen (3) Kristalle aus durchsichtigem Material befinden.

12. Vorrichtung nach einem der Ansprüche 1 bis 11, dadurch gekennzeichnet, daß das Licht von einer vorzugsweise einer großen Plattenfläche gegenüber angeordneten Lichtquelle (7;16) ausgeht und durch Reflektions- und/oder Refraktionselemente (6;15) in die Platte (1) eingeleitet wird.

13. Vorrichtung nach Anspruch 12, dadurch gekennzeichet, daß die Refraktionselemente (6) vorzugsweise mehrere lichtdurchlässige Schichten (8) sind, die parallel oder schräg zur Lichtleitplatte (1) angeordnet und ganz oder teilweise in diese eingelassen sind und deren Dichten in Strahlungsrichtung abnehmen.

14. Vorrichtung nach Anspruch 12, dadurch gekennzeichnet, daß die Refraktionselemente von vorzugsweise einer lichtdurchlässigen Schicht gebildet werden, die parallel oder schräg zur Lichtleitplatte angeordnet ist und ganz oder teilweise in diese eingelassen ist und deren Dichte geringer als die Dichte zwischen ihr und der Lichtquelle ist, wobei insbesondere ein dichteres Medium die Lichtquelle umgibt.

15. Vorrichtung nach Anspruch 13 oder 14, dadurch gekennzeichnet, daß die flächen (9,10) der Refraktionselemente, durch die Strahlen nicht durchtreten müssen, reflektierend sind.

16. Vorrichtung nach Anspruch 12, daduch gekennzeichnet, daß die Reflektionselemente (15) von mindestens einer schräg zu den großen Plattenflächen verlaufenden Spiegelfläche (17) gebildet werden.

17. Vorrichtung nach Anspruch 16, dadurch gekennzeichnet, daß die Lichteinspeisungsvorrichtung (15) vorzugsweise etwa im mittleren Bereich der Lichtleitplatte (1) angeordnet ist und daß die Reflektionselemente einen Kegel bilden.

18. Vorrichtung nach einem der Ansprüche 1 bis 17, dadurch gekennzeichnet, daß mindestens die lichtabgebende Fläche mit dünnen Drähten durchzogen ist, die geerdet sind oder auf einem Potential liegen und eine statische Aufladung verhindern.

19. Vorrichtung nach einem der Ansprüche 1 bis 17, dadurch gekennzeichnet, daß mindestens die lichtabgebende Fläche mit einer dünnen lichtdurchlässigen Metallschicht überzogen ist, die eine statische Aufladung verhindert.

20. Vorrichtung nach einem der Ansprüche 1 bis 19, dadurch gekennzeichnet, daß in die Lichtplatte lichtführende Elemente, z.B. Glasfasern, eingelegt sind.

## Claims

1. Device composed of a light guide plate in which light emitted from a light source and with components in a direction parallel to the main surface of the plate is guided and issues from projections (3) on a surface of the plate, characterized in that the smooth surface of the plate is coated with a continuous,transparent intermediate layer (2) having on one side closely spaced projections (3) with a height and width lying in a range between 0.5 mm and 0.001 mm.

2. Device according to Claim 1, characterized in that the layer (2) is a flexible foil or a rigid plate which bears against the light guide plate (1) without interspace.

3. Device according to Claim 2, characterized in that the foil or rigid plate is bonded to the light guide plate.

4. Device according to one of Claims 1 to 3, characterized in that the layer (2) has been produced by spraying on.

5. Device according to one of Claims 1 to 4, characterized in that the height and width of the projections ( 3 ) lie between 0. 5 mm and 0. 01 mm.

6. Device according to one of Claims 1 to 5, characterized in that a reflector is located above the projections, which reflector allows the light to issue from the surface of the plate not provided with the layer (2)

7. Device according to Claim 6, characterized in that a further layer is located between the reflector and the projections (3), which layer is thinner in terms of optics than the layer (2).

8. Device according to Claim 7, characterized in that the reflector and the further layer only cover a part of the total light guide plate (1, 2, 3) in such a way that the light also issues from the edges of this further layer.

9. Device according to Claim 8, characterized in that the edges of the reflector are at an angle and are reflective.

10. Device according to one of Claims 1 to 5, characterized in that both sides of the light guide plate are provided with the layer from which the light issues.

11. Device according to one of Claims 1 to 10, characterized in that crystals made of transparent material are located in at least some of the projections (3).

12. Device according to one of Claims 1 to 11, characterized in that the light is emitted from a light source (7; 16) preferably arranged opposite a main surface of the plate and is conducted into the plate (1) by reflection elements and/or refraction elements (6;15).

13. Device according to Claim 12, characterized in that the refraction elements (6) are preferably several light-transmitting layers (8) which are arranged parallel or at an angle to the light guide plate (1) and are completely or partially sunk into the latter and the densities of which decrease in the direction of radiation.

14. Device according to Claim 12, characterized in that the refraction elements are formed by preferably one light-transmitting layer which is arranged parallel or at an angle to the light guide plate and is completely or partially sunk into the latter and the density of which is less than the density between itself and the light source, a denser medium in particular surrounding the light source.

15. Device according to Claim 13 or 14, characterized in that the surfaces (9, 10) of the refraction elements through which beams do not have to pass are reflective.

16. Device according to Claim 12, characterized in that the reflection elements (15) are formed by at least one mirror surface (17) extending at an angle to the main surfaces of the plate.

17. Device according to Claim 16, characterized in that the device (15) to feed in the light is preferably arranged approximately in the central region of the light guide plate (1), and in that the reflection elements form a cone.

18. Device according to one of Claims 1 to 17, characterized in that thin wires are passed through at least the light-emitting surfaces which are earthed or lie on a potential and prevent static electrification.

19. Device according to one of Claims 1 to 17, characterized in that at least the light-emitting surface is coated with a thin light-transmitting metallic layer which prevents static electrification.

20. Device according to one of Claims 1 to 19, characterized in that light-guiding elements, e.g. glass fibres, are inserted in the light plate.


**Revendications**

1. Dispositif, constitué d'une plaque servant de guide de lumière, dans lequel de la lumière provenant d'une source lumineuse et avec des composants parallels aux surfaces principales de la plaque est guidée et sort sur l'une des surfaces de la plaque en traversant des saillies (3), characterisé en ce que la surface lisse de la plaque est revêtue d'une couche intermédiaire (2),transparente et continue, qui comporte les saillies (3) sur l'une de ses faces, ces saillies (3) étant disposées côte à côte et présentant une hauteur et une largeur comprises entre 0,001 mm et 0,5 mm.

2. Dispositif suivant la revendication 1, caractérisé en ce que la couche (2) est une feuille souple ou une plaque rigide qui est appliquée sans intervalle sur la plaque (1) servant de guide de lumière.

3. Dispositif suivant la revendication 2, caractérisé en ce que la feuille souple ou plaque rigide est collée sur la plaque servant de guide de lumière.

4. Dispositif suivant l'une des revendications 1 à 3, caractérisé en ce que la couche (2) est réalisée par pulvérisation.

5. Dispositif suivant l'une des revendications 1 à 4, caractérisé en ce que les saillies (3) ont une hauteur et une largeur comprises entre 0,01 mm et 0,5 mm.

6. Dispositif suivant l'une des revendications 1 à 5, caractérisé en ce qu'au-dessus des saillies, il se trouve un réflecteur qui fait sortir la lumière par la surface de la plaque non pourvue de la couche intermédiaire (2).

7. Dispositif suivant la revendication 6, caractérisé en ce qu'entre le réflecteur et les saillies (3), il se trouve une seconde couche qui est optiquement moins dense que la couche intermédiaire (2).

8. Dispositif suivant la revendication 7, caractérisé en ce que le réflecteur et la seconde couche ne recouvrent qu'une partie de l'ensemble de la plaque (1, 2, 3) servant de guide de lumière, de telle façon que la lumière sorte aussi par les bords de cette seconde couche.

9. Dispositif suivant la revendication 8, caractérisé en ce que les bords du réflecteur sont obliques et réfléchissants.

10. Dispositif suivant l'une des revendications 1 à 5, caractérisé en ce que les deux faces de la plaque servant de guide de lumière sont pourvues de la couche de sortie de lumière.

11. Dispositif suivant l'une des revendications 1 à 10, caractérisé en ce que, dans au moins certaines des saillies (3), il se trouve des cristaux en matière transparente.

12. Dispositif suviant l'une des revendications 1 à 11, caractérisé en ce que la lumière provient d'une source lumineuse (7, 16) de préférence disposée en regard d'une surface principale de la plaque et en ce qu'elle est introduite dans la plaque (1) en traversant des éléments de réflexion et/ou de réfraction (6, 15).

13. Dispositif suivant la revendication 12, caractérisé en ce que les éléments de réfraction (6) sont de préférence constitués par plusieurs couches transparentes (8) qui sont disposées parallèlement à la plaque (1) servant de guide de lumière ou d'une manière inclinée par rapport à cette dernière et qui sont totalement ou partiellement encastrées dans cette plaque, leurs densités optiques diminuant suivant la direction du rayonnement.

14. Dispositif suivant la revendication 12, caractérisé en ce que les éléments de réfraction sont constitués par une couche, de préférence transparente, qui est disposée parallèlement à la plaque servant de guide de lumière ou d'une manière inclinée par rapport à cette dernière, qui est encastrée totalement ou partiellement dans cette plaque et dont la densité optique est inférieure à celle existant entre elle et la source de lumière, tandis que notamment un milieu optiquement plus dense entoure la source de lumière.

15. Dispositif suivant la revendication 13 ou 14, caractérisé en ce que les surfaces (9, 10) des éléments de réfraction que des rayons ne doivent pas traverser sont réfléchissantes.

16. Dispositif suivant la revendication 12, caractérisé en ce que les éléments de réflexion (15) sont constitués par au moins une surface spéculaire (17) s'étendant d'une manière inclinée par rapport aux surfaces principales de la plaque.

17. Dispositif suivant la revendication 16, caractérisé en ce que le dispositif de fourniture de lumière (15) est disposé de préférence sensiblement dans la zone centrale de la plaque (1) servant de guide de lumière et en ce que les éléments de réflexion forment une sphère.

18. Dispositif suivant l'une des revendications 1 à 17, caractérisé en ce qu'au moins la surface émettant de la lumière est traversée de minces fils métalliques qui sont mis à la terre ou se trouvent à un certain potentiel et qui empêchent un chargement statique.

19. Dispositif suivant l'une des revendications 1 à 17, caractérisé en ce qu'au moins la surface émettant de la lumière est revêtue d'une mince couche métallique transparente qui empêche un chargement statique.

20. Dispositif suivant l'une des revendications 1 à 19, caractérisé en ce que des éléments guidant la lumière, par exemple des fibres de verre, sont enrobés dans la plaque servant de guide de lumière.

FIGUR 1

*FIGUR 2*

FIGUR 3